Europäisches Patentamt

European Patent Office

Office européen des brevets

(19)

(11) **EP 1 028 914 B1**

(12) **FASCICULE DE BREVET EUROPEEN**

(45) Date de publication et mention
de la délivrance du brevet:
**01.08.2001 Bulletin 2001/31**

(21) Numéro de dépôt: **98954533.0**

(22) Date de dépôt: **06.11.1998**

(51) Int Cl.⁷: **C01B 31/00**, H01M 4/58

(86) Numéro de dépôt international:
**PCT/FR98/02379**

(87) Numéro de publication internationale:
**WO 99/24359 (20.05.1999 Gazette 1999/20)**

(54) **PRODUIT CARBONE RICHE EN LITHIUM UTILISABLE COMME ELECTRODE NEGATIVE DANS UN ACCUMULATEUR AU LITHIUM**

KOHLENSTOFFPRODUKT MIT HOHEM LITHIUMGEHALT FÜR NEGATIVE ELEKTRODEN EINER LITHIUM-SEKUNDÄRBATTERIE

CARBON PRODUCT RICH IN LITHIUM FOR USE AS NEGATIVE ELECTRODE IN A LITHIUM CELL

(84) Etats contractants désignés:
**DE ES FR GB IT**

(30) Priorité: **07.11.1997 FR 9714042**

(43) Date de publication de la demande:
**23.08.2000 Bulletin 2000/34**

(73) Titulaire: **CENTRE NATIONAL D'ETUDES SPATIALES**
**75001 Paris (FR)**

(72) Inventeurs:
• **WILLMANN, Patrick**
**F-31450 Montgiscard (FR)**
• **BILLAUD, Denis**
**F-54000 Nancy (FR)**
• **THEVENOT, Laurent**
**F-54000 Nancy (FR)**

(74) Mandataire: **Ilgart, Jean-Christophe et al**
**c/o Brevatome,**
**3, rue du Docteur Lancereaux**
**75008 Paris (FR)**

(56) Documents cités:
**EP-A- 0 700 106**      **WO-A-90/07798**

• **GORDON & BREACH SCIENCE PUBL INC, NEWARK, NJ, USA: "New graphite intercalation compound containing sodium associated with oxygen" PROCEEDINGS OF THE 7TH INTERNATIONAL SYMPOSIUM ON INTERCALATION COMPOUNDS;LOUVAIN-LA-NEUVE, BELG MAY 10-14 1993, vol. 244, 10 mai 1993, pages 29-34, XP002073421 Mol Cryst Liq Cryst Sci Technol Sect A Mol Crys Liq Cryst;Molecular Crystals and Liquid Crystals Science and Technology, Section A: Molecular Crystals and Liquid Crystals 1994 Publ by Gordon & Breach cité dans la demande**
• **ESSADDEK A ET AL: "PHENOMENES D'INSERTION-DESINSERTION DANS UNE PHASE GRAPHITE-SODIUM -OXYGENE SOUMISE A UNE VAPEUR DE POTASSIUM INTERCALATION DE-INTERCALATION PHENOMENA IN A GRAPHITE-SODIUM-OXYGEN COMPOUND UNDER POTASSIUM VAPOUR" COMPTES RENDUS DE L ACADEMIE DES SCIENCES: SERIE II: MECANIQUE-PH YSIQUE-CHIMIE-ASTRONOMIE, vol. 319, no. 9, 3 novembre 1994, pages 1009-1012, XP000478255**

EP 1 028 914 B1

## Description

## Domaine technique

La présente invention a pour objet un produit carboné riche en lithium comprenant du lithium, du sodium, du carbone et de l'oxygène, utilisable en particulier comme électrode négative dans un accumulateur électrique au lithium.

Elle s'applique à la réalisation d'accumulateurs à haute énergie massique qui sont d'un grand intérêt pour le développement de l'électronique portable et à plus long terme pour la fabrication de véhicules électriques. Actuellement, pour ces applications, le choix semble se porter sur les batteries à ions lithium en raison de leur très forte énergie massique potentielle. Pour la partie anodique de ces batteries, de nombreuses études ont montré qu'il était possible d'utiliser des composés carbonés et en particulier le graphite.

En effet, le graphite de structure lamellaire a la propriété, sous l'effet d'un courant électrique dans un milieu électrolytique approprié, d'insérer dans sa structure des ions lithium. Le produit obtenu est un composé d'insertion du graphite, c'est-à-dire qu'il y a envahissement des espaces vacants entre les feuillets de graphite, appelés aussi espaces de Van der Waals, par les ions lithium.

Actuellement, le composé d'insertion du lithium dans le graphite le plus riche qui soit connu, possède un atome de lithium pour six atomes de carbone, ce qui correspond à la formule brute $LiC_6$ et à une capacité électrochimique de 372 mA.h.g.$^{-1}$. Ce composé $LiC_6$ est décrit dans Carbon, volume 13, pages 337-345, 1975 [1].

On connaît aussi par FR-A-2 697 261 [2] un composé d'insertion polyacétylène-lithium dans lequel le rapport C/Li est égal à 6 comme dans le cas du composé d'insertion du lithium dans le graphite $LiC_6$.

Pour améliorer les performances des batteries au lithium, il serait toutefois d'un grand intérêt d'utiliser comme électrode négative des composés encore plus riches en lithium que ces composés connus, afin d'obtenir une capacité électrochimique supérieure.

## Exposé de l'invention

La présente invention a précisément pour objet un nouveau produit carboné plus riche en lithium que les composés connus, utilisable comme électrode négative dans une batterie à ions lithium.

Selon l'invention, ce produit carboné riche en lithium répond à la formule suivante :

$LiNa_xC_yO_z$ (I) dans laquelle x, y et z sont tels que :

$0,4 \leq x \leq 0,6$
$2,5 \leq y \leq 3,5$
$0,2 \leq z \leq 1$

Le produit carboné de l'invention est ainsi plus riche en lithium que le composé d'insertion du lithium dans le graphite $LiC_6$ puisque le rapport C/Li se situe dans la gamme de 2,5 à 3,5 ce qui correspond à un enrichissement important en lithium et à une capacité électrochimique accrue (~ 744 mA.h. par gramme de carbone).

Ce produit carboné riche en lithium peut être obtenu aisément à partir d'un composé graphite-sodium-oxygène tel que celui décrit par M. El Gadi et al dans J. Mol. Cryst. Liquid. Cryst., 244-245, 1994, page 41 [3].

La formule de ce composé déduite d'analyses élémentaires correspond à

$$C_{4,75 \pm 0,05} NaO_{0,35 \pm 0,05}.$$

Selon l'invention, on prépare le composé carboné riche en lithium par insertion de lithium dans un composé graphite-sodium-oxygène de ce type. Cette insertion peut être réalisée soit par voie chimique, soit par voie électrochimique.

L'insertion par voie chimique peut être réalisée par un procédé analogue à celui décrit par A. Essaddek et al dans C. R. Acad. Sci., Paris, t. 319, Série II, 1994, pages 1009-1012 [4], en partant du composé $NaO_{0,5}C_6$ de formule théorique idéale déduite de l'analyse cristallographique. Dans ce cas, on met en contact le composé graphite-sodium-oxygène avec du lithium liquide à une température et pendant une durée suffisante pour obtenir le produit carboné riche en lithium de l'invention.

On peut aussi partir d'un composé graphite-sodium-oxygène préparé en mettant en contact dans un enceinte étanche ne contenant pas d'oxygène, du graphite avec du sodium contenant une faible quantité d'oxygène, à une température de 460 à 480°C, de préférence de 470°C.

Le graphite utilisé pour cette préparation peut être du graphite naturel ou artificiel, en paillettes ou en poudre de granulométries variables.

A titre d'exemples de graphites susceptibles d'être utilisés, on peut citer le pyrographite du type PGCCL fourni par le Carbone Lorraine et le pyrographite hautement orienté HOPG (highly orientated pyrographite) fourni par Union Carbide.

La faible quantité d'oxygène présente dans le sodium peut représenter 0,5 à 2 % en poids pour un volume de sodium de 1 à 2 cm$^3$.

De préférence selon l'invention, on réalise l'insertion du lithium dans le composé graphite-sodium-oxygène par voie électrochimique. Dans ce cas, on utilise une cellule électrolytique à deux électrodes dont l'une est en lithium et l'autre est constituée du composé graphite-sodium-oxygène, les deux électrodes étant immergées dans un électrolyte comprenant un sel de lithium.

L'électrolyte comprend généralement un solvant non aqueux par exemple du carbonate d'éthylène. Les sels de lithium susceptibles d'être utilisés peuvent être de différents types mais on préfère le perchlorate de lithium.

Pour réaliser l'insertion électrochimique, on opère de préférence à une température de 20 à 90°C et on impose un potentiel de 0 volt entre les deux électrodes, ce qui peut être obtenu en reliant les deux électrodes par simple court-circuit.

Le produit riche en lithium de l'invention peut être utilisé en particulier comme électrode négative dans un accumulateur électrique au lithium.

Aussi, l'invention a également pour objet un accumulateur comprenant une électrode négative à base de lithium, une électrode positive et un électrolyte conducteur par ions lithium dans lequel l'électrode négative comprend le produit carboné riche en lithium de l'invention.

Dans cet accumulateur, l'électrode positive peut être réalisée en divers matériaux tels que des oxydes, des sulfures ou des oxysulfures.

A titre d'exemple d'oxydes utilisables, on peut citer l'oxyde de vanadium $V_2O_5$, l'oxyde de nickel $NiO_2$, l'oxyde de cobalt $Co0_2$, les oxydes mixtes de cobalt et de nickel, les oxydes de manganèse, l'oxyde de molybdène $MoO_3$, les oxydes de chrome et les bronzes de vanadium $MxV_2O_5$ avec M représentant le fer, le sodium, le potassium, le lithium, l'argent, l'aluminium, le chrome, le baryum, le nickel ou le cobalt.

A titre d'exemples de sulfures utilisables, on peut citer le sulfure de titane $TiS_2$, le sulfure de molybdène $MoS_2$ et les sulfures mixtes de nickel et de molybdène.

A titre d'exemples d'oxysulfures utilisables, on peut citer les oxysulfures de molybdène et de titane.

Dans cet accumulateur électrique, l'électrclyte utilisé est généralement constitué par une solution de sel de lithium dans un solvant organique approprié.

Les solvants organiques utilisables sont par exemple le carbonate de propylène, le carbonate d'éthylène, le carbonate de diméthyle (DMC), le carbonate de méthyle et d'éthyle (MEC), le tétrahydrofurane, le 2-méthyltétrahydrofurane, le dimétoxyméthane, le diméthoxyéthane, le N,N-diméthylformamide, le sulfolane et des mélanges de ceux-ci.

Les sels de lithium utilisables sont par exemple le perchlorate de lithium $LiClO_4$, l'hexafluorophosphate de lithium $LiPF_6$, l'hexafluoroarséniate de lithium $LiAsF_6$, le trifluorométhanesulfonate de lithium $LiCF_3SO_3$ et le tétrafluoroborate de lithium $LiBF_4$.

Dans l'accumulateur électrique, on peut aussi utiliser comme électrolyte au lieu d'une solution de sel de lithium dans un solvant organique, des électrolytes solides ou des polymères conducteurs par ions lithium.

A titre d'exemples d'électrolytes solides, on peut citer les verres au lithium obtenus par exemple à partir de $P_2S_5$, $Li_2S$ et LiI ou de $B_2S_3$, $Li_2S$ et LiI.

Les polymères conducteurs par ions lithium peuvent être constitués par exemple par du poly(oxyde d'éthylène) ou poly(oxyde de propylène) chargé d'un sel de lithium tel que les sels décrits précédemment.

Dans un accumulateur de ce type utilisant un électrolyte liquide, on dispose généralement un séparateur entre les électrodes, et celui-ci peut être constitué par un film microporeux réalisé par exemple en polypropylène ou en polyéthylène.

Cet accumulateur peut être réalisé sous la forme d'un accumulateur cylindrique comportant un enroulement en spirale des deux électrodes séparées éventuellement par le séparateur. Il peut également être réalisé sous la forme d'un accumulateur de type prismatique avec des électrodes planes en vis-à-vis et éventuellement un séparateur disposé entre ces électrodes.

D'autres caractéristiques et avantages de l'invention apparaîtront mieux à la lecture de la description qui suit, donnée bien entendu à titre illustratif et non limitatif, en référence aux dessins annexés.

**Brève description des dessins**

- La figure 1 représente le spectre de diffraction des rayons X donnant les réflexions 001 du composé graphite-sodium-oxygène préparé dans l'exemple 1 ;
- la figure 2 représente le spectre de diffraction X présentant les réflexions hk0 du composé graphite-sodium-oxygène de l'exemple 1 ;
- la figure 3 représente un spectre de diffraction des rayons X présentant les réflexions 001 du produit riche en lithium de l'invention ;
- la figure 4 représente le spectre de diffraction des rayons X présentant les réflexions hk0 du produit riche en lithium de l'invention ;
- la figure 5 illustre le spectre d'émission de rayonnement X (EDX) du produit riche en lithium de l'invention ;
- les figures 6 à 8 illustrent les spectres de perte d'énergie des électrons (EELS) du produit riche en lithium de l'invention et confirment la présence d'oxygène (figure 6), de sodium (figure 7) et de lithium (figure 8) ;
- la figure 9 est une courbe illustrant l'analyse thermique différentielle du composé riche en lithium de l'invention.
- la figure 10 est une représentation schématique d'un accumulateur électrique conforme à l'invention.

**Exposé détaillé des modes de réalisation**

Exemple 1 : Synthèse du composé graphite-sodiumoxygène.

On utilise pour préparer ce composé un réacteur d'acier comportant deux compartiments superposés séparés par une grille métallique. Dans le compartiment inférieur, on introduit du sodium métallique contenant une faible quantité d'oxygène, et dans le compartiment supérieur on dépose des plaquettes de pyrographite de type PGCCL fourni par Le Carbone Lorraine. L'assemblage de ce réacteur a été effectué dans une atmosphère d'argon pur, c'est-à-dire exempt de trace d'oxygène. On assure l'étanchéité du réacteur par un joint torique en cuivre et, pour éviter une pollution accidentelle du milieu réactionnel, on place le réacteur dans un tube de verre dans lequel on fait un vide primaire. On place ensuite l'ensemble constitué par le tube contenant le réacteur dans un four vertical et on le porte à une température de 200°C pendant 12 heures. Le sodium légèrement oxydé se trouve alors à l'état liquide.

On sort alors le réacteur de son tube et on le place immédiatement dans une centrifugeuse. Après centrifugation pendant 15 minutes à 5 000 t/min, le milieu réactionnel liquide envahit le compartiment contenant l'échantillon de pyrographite. On replace alors le réacteur dans la position inverse, c'est-à-dire en plaçant le compartiment supérieur vers le bas et on le remet dans le tube dans lequel est réalisé un vide primaire. On porte alors le mélange réactionnel à la température de 470°C pendant trois jours, puis on sépare le graphite du milieu réactionnel par centrifugation dans les mêmes conditions que précédemment. On obtient ainsi un composé graphite-sodium-oxygène de couleur bleue.

On caractérise ce composé par diffraction des rayons X en utilisant un diffractomètre classique $\theta/2\theta$ comportant une source de molybdène ($\lambda = 0,72926$ pm) et un monochromateur en quartz montés en série et enfin un compteur à scintillation. L'échantillon est placé sous atmosphère d'argon pur dans un tube de Lindeman qui est ensuite scellé.

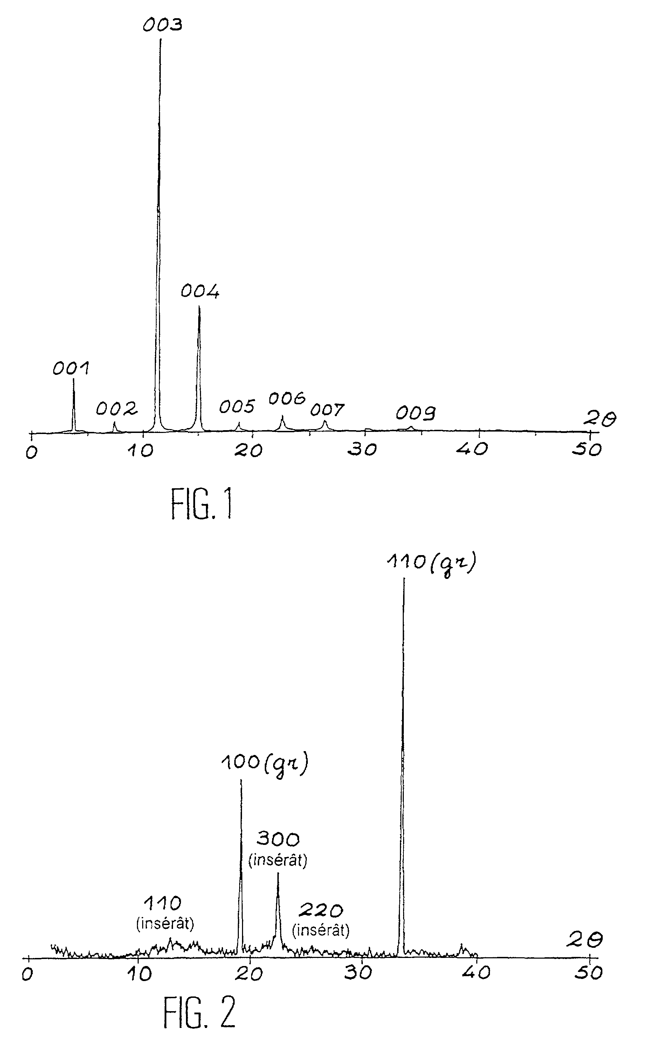

La figure 1 illustre le spectre de diffraction des rayons X présentant les réflexions 001 de ce composé. Ce diffractogramme permet le calcul de la période d'identité du composé qui est de 1080 pm.

Sur la figure 2, on a représenté le spectre correspondant aux réflexions hk0 de ce composé. Il fait apparaître les pics 100 et 110 du graphite ainsi que des pics de plus faible intensité dûs à l'insertion de sodium accompagné d'oxygène entre les feuillets graphitiques (composé ternaire).

On effectue une analyse par diffraction des électrons de ce composé sur un échantillon de pyrographite broyé sous atmosphère d'argon pur que l'on dépose sur une grille à trous en carbone amorphe. Cette analyse met en évidence des taches dues au graphite ainsi que des taches dues au sodium inséré entre les plans graphitiques.

Exemple 2 : Préparation d'un produit riche en lithium de formule $LiNa_xC_yO_z$ (avec x = 0,4-0,6 y = 2,5-3,5 et z = 0,2 à 1.

On obtient ce produit par insertion de lithium par voie électrochimique dont le composé graphite-sodium-oxygène préparé dans l'exemple i.

Dans ce but, on utilise une cellule étanche à deux électrodes dans laquelle on effectue un vide primaire.

L'une de ces deux électrodes est constituée d'un ruban de lithium maintenu dans une pince de titane servant de référence et de contre-électrode, l'autre électrode, ou électrode de travail, est constituée du composé de couleur bleue graphite-sodium-oxygène préparé dans l'exemple 1, qui est lui aussi tenu par une pince de titane.

Les deux électrodes baignent dans un mélange électrolytique constitué de carbonate d'éthylène (EC) et de perchlorate de lithium $LiClO_4$ dans les proportions suivantes :

1,5 mol de $LiClO_4$ par kg de carbonate d'éthylène.

On a dégazé sous vide les deux constituants de l'électrolyte avant de les mélanger. Le sel de lithium $LiClO_4$ a été dégazé sous vide primaire à 150°C pendant 4 heures ; le solvant carbonate d'éthylène a été dégazé sous vide primaire à température ambiante pendant deux heures.

Pour réaliser l'insertion électrochimique des ions lithium, on opère à une température de 20 à 90°C, par exemple à 80°C, en imposant un potentiel entre les deux électrodes de 0 Volt au moyen d'un potentiostat/galvanostat. On peut aussi réaliser l'insertion par simple court-circuit, donc en reliant les deux électrodes.

L'avancement de la réaction est réglé par des problèmes cinétiques ; il dépend de la surface spécifique du graphite pour une concentration donnée de l'électrolyte et aussi de la température.

Après un temps maximum de réaction de 30 jours, on obtient le produit riche en lithium dont la formule de composition théorique est la suivante :

$$LiC_3Na_{0,5}O_{0,25}$$

On caractérise ce produit par diffraction des rayons X et par diffraction des électrons comme dans l'exemple 1.

La figure 3 représente le diffractogramme pour les réflexions 001 de ce produit riche en lithium. On calcule à partir de ce diffractogramme la période d'identité du produit, qui est de l'ordre de 1035 pm. En plus des réflexions 001, le diffractogramme met en évidence la réflexion 110 du sodium métallique.

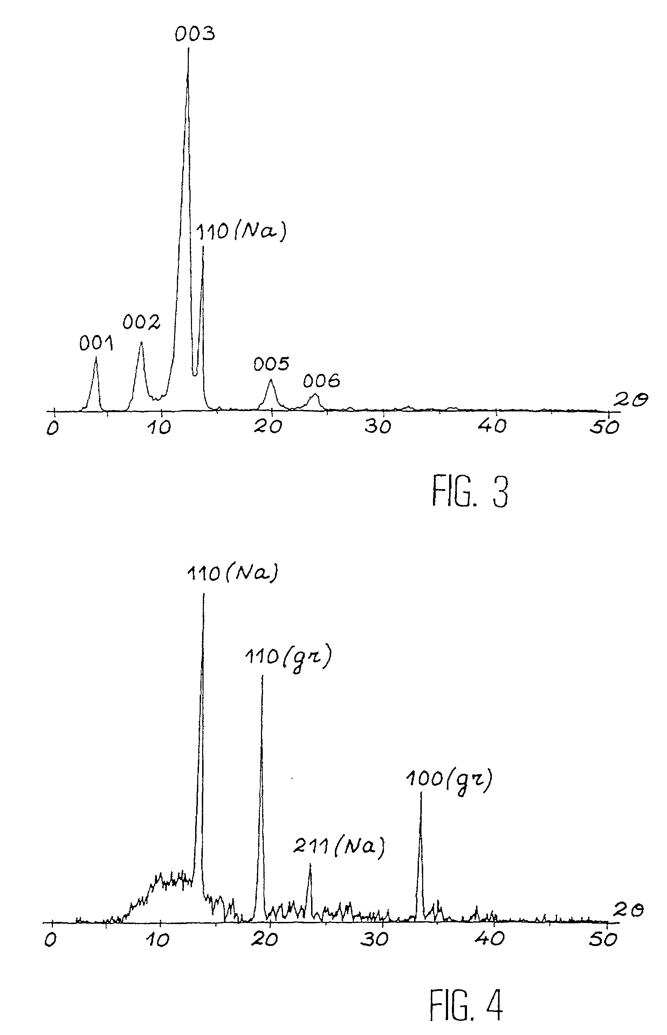

Sur la figure 4, on a représenté le diffractogramme pour les réflexions hk0 de ce produit. Celui-ci présente les réflexions caractéristiques 110 et 100 du graphite ainsi que des réflexions 211 et 110 du sodium métallique.

L'analyse par diffraction des électrons montre des taches visibles dues au graphite ainsi que des taches fines attribuées au sodium métallique. On trouve de plus une nouvelle tache due à l'insertion au lithium.

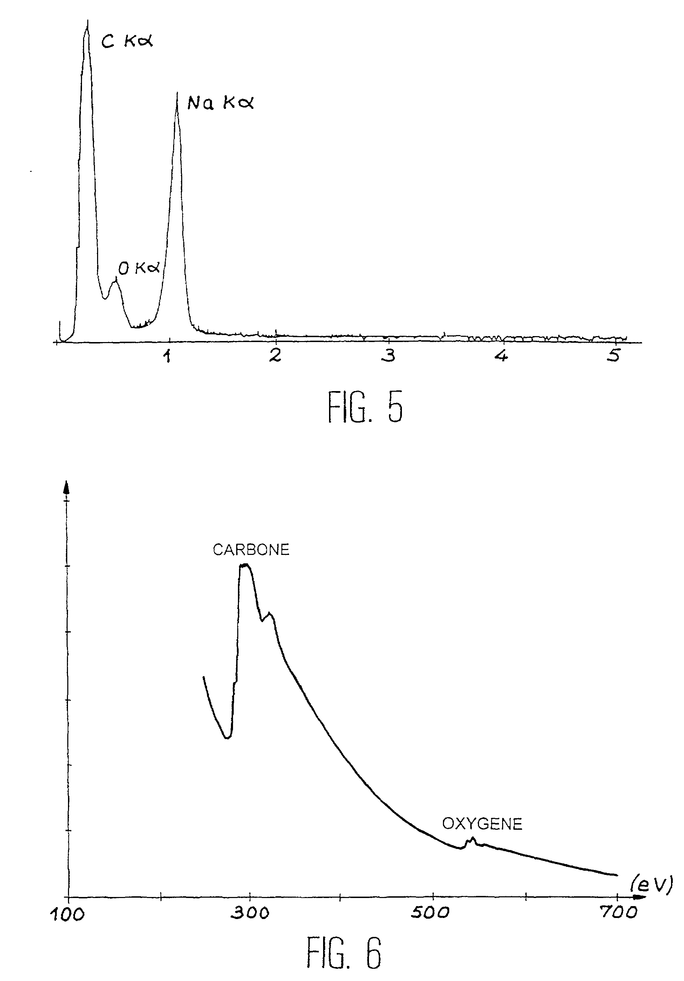

Sur la figure 5, on a représenté le spectre d'émission de rayonnement X de ce produit. Il met en évidence les éléments suivants : carbone, oxygène et sodium.

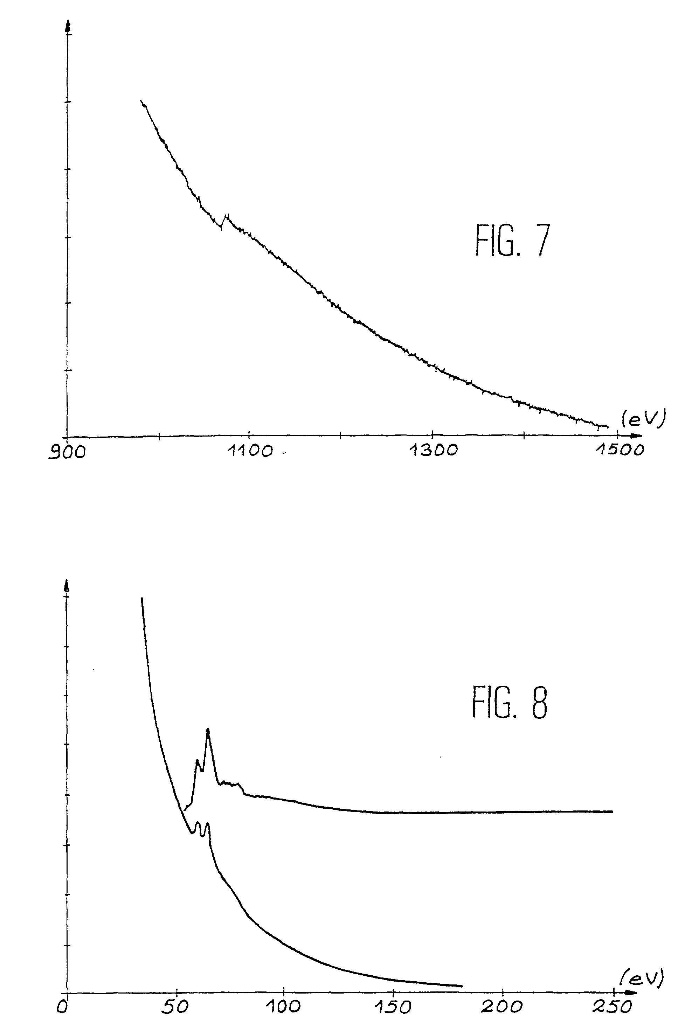

Sur les figures 6 à 8, on a représenté les spectres de perte d'énergie des électrons qui confirment la présence de carbone et d'oxygène (figure 6), de sodium (figure 7) et de lithium (figure 8).

L'analyse quantitative des éléments détectés par cette technique confirme l'analyse élémentaire faite initialement, soit la formule

$$LiNa_xC_yO_z$$

avec :

     x = 0,4 - 0,6
     y = 2,5 - 3,5
     z = 0,2 - 1

correspondant à la formule idéale : $LiC_3Na_{0,5}O_{0,25}$.

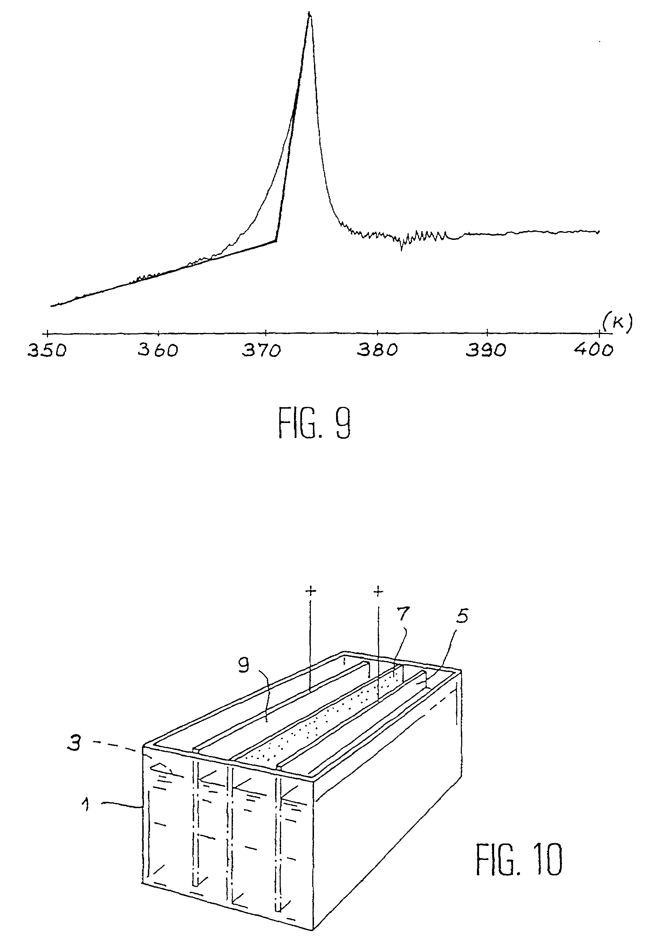

Sur la figure 9, on a représenté la courbe d'analyse thermique différentielle sous atmosphère d'argon du produit obtenu. On voit sur cette courbe le pic de fusion correspondant à la fusion du sodium métallique, qui confirme la présence de sodium sous forme métallique dans ce composé.

Exemple 3 : Préparation d'un produit riche en lithium de formule $LiNa_xC_yO_z$ (x = 0,4 - 0,6 y = 2,5 - 3,5 z = 0,2 - 1)

Dans cet exemple, on part du composé graphite-sodium-oxygène de l'exemple 1, et on insère du lithium dans celui-ci par voie chimique.

Dans ce but, on utilise un réacteur à deux compartiments du même type que celui de l'exemple 1 et on place le composé graphite-sodium-oxygène de couleur bleue dans le compartiment supérieur et on remplit de lithium le compartiment inférieur.

On opère comme dans l'exemple 1 en plaçant le réacteur dans un tube de verre dans lequel on fait un vide primaire, puis on réalise la mise en contact du lithium liquide et du composé par centrifugation à 5 000 tours/min pendant quinze minutes. Pour fondre le lithium, on porte l'ensemble à 200°C pendant douze heures, et on réalise la réaction à 200°C pendant une durée maximum de dix jours.

On obtient ainsi le produit riche en lithium de formule $LiNa_xC_yO_z$ qui présente les mêmes caractéristiques que celui obtenu dans l'exemple 2.

Ainsi, l'invention permet d'obtenir un produit beaucoup plus riche en lithium que $LiC_6$, ce qui conduit

au doublement de la capacité électrochimique du graphite. Dans ce produit, le lithium inséré dans le composé graphite-sodium-oxygène se substitue donc au sodium qui forme alors des inclusions métalliques entre les feuillets de graphite.

Dans ce produit on a des couches successives d'intercalant entre les feuillets graphitiques qui n'ont pas la même composition chimique, soit des couches Li/O/Li/O/Li où O est l'oxygène engagé dans un ion peroxyde $O_2^{2-}$, et des couches de Li, avec une couche de Li pour cinq couches de Li/O/Li/O/Li. Le sodium se trouve en inclusions diffuses dans le produit.

Un tel produit peut être utilisé dans un accumulateur au lithium comme électrode négative.

Sur la figure 10, on a représenté un accumulateur électrique au lithium utilisant le produit carboné riche en lithium de l'invention, de formule :

$$LiNa_xC_yO_z \qquad (I).$$

Sur cette figure, on voit que l'accumulateur comprend un récipient 1 en polytétrafluoroéthylène, rempli d'un électrolyte 3 constitué par exemple par du carbonate d'éthylène contenant 1 mol/l de perchlorate de lithium, dans lequel sont disposés successivement une électrode négative 5 constituée par le produit carboné riche en lithium de formule (I) de l'invention, un séparateur 7 constitué par une membrane microporeuse en polypropylène, et une électrode positive 9 en oxyde de vanadium.

REFERENCES CITEES

     [1] Carbon, Vol. 13, 1975, pages 337-345

     [2] FR-A-2 697 261

     [3] J.Mol. Cryst. Liquid Cryst., 244-245, 1994, page 41

     [4] C.R. Acad. Sci. Paris, t. 319, Série II, 1994, pages 1009-1012

**Revendications**

**1.** Produit carboné riche en lithium répondant à la formule suivante :

$$LiNa_xC_yO_z \qquad (I)$$

dans laquelle x, y et z sont tels que

$$0,4 \leq x \leq 0,6$$
$$2,5 \leq y \leq 3,5$$
$$0,2 \leq z \leq 1$$

**2.** Procédé de préparation d'un produit carboné riche en lithium répondant à la formule suivante :

$$LiNa_xC_yO_z \qquad (I)$$

dans laquelle x, y et z sont tels que

$$0,4 \leq x \leq 0,6$$
$$2,5 \leq y \leq 3,5$$
$$0,2 \leq z \leq 1$$

selon lequel on met en contact un composé graphite-sodium-oxygène avec du lithium pour insérer dans celui-ci des ions lithium.

**3.** Procédé selon la revendication 2, dans lequel l'insertion est réalisée par voie électrochimique dans une cellule électrolytique à deux électrodes dont l'une est en lithium et l'autre en le composé graphite-sodium-oxygène, les deux électrodes étant immergées dans un électrolyte comprenant un sel de lithium.

**4.** Procédé selon la revendication 3, dans lequel l'électrolyte est un mélange de carbonate d'éthylène et de perchlorate de lithium.

**5.** Procédé selon la revendication 3 ou 4, dans lequel on opère à une température de 20 à 90°C en imposant un potentiel de 0 volt entre les deux électrodes ou en reliant les deux électrodes.

**6.** Procédé selon l'une quelconque des revendications 2 à 5, dans lequel le composé graphite-sodium-oxygène répond à la formule $C_{4,75 \pm 0,05}NaO_{0,35 \pm 0,05}$.

**7.** Procédé selon l'une quelconque des revendications 2 à 5, dans lequel le composé graphite-sodium-oxygène est préparé en mettant en contact dans une enceinte étanche ne contenant pas d'oxygène, du graphite avec du sodium liquide contenant un faible quantité d'oxygène, à une température de 460 à 480°C.

**8.** Accumulateur électrique au lithium comprenant une électrode négative à base de lithium, une électrode positive et un électrolyte conducteur par ion lithium, dans lequel l'électrode négative comprend un produit carboné riche en lithium de formule :

$$LiNa_xC_yO_z \qquad (I)$$

dans laquelle x, y et z sont tels que

$$0,4 \leq x \leq 0,6$$
$$2,5 \leq y \leq 3,5$$
$$0,2 \leq z \leq 1$$

**Claims**

**1.** A lithium-rich carbonaceous substance with the following formula:

$$LiNa_xC_yO_z \qquad (I)$$

in which x, y and z are such that

$$0.4 \leq x \leq 0.6$$
$$2.5 \leq y \leq 3.5$$
$$0.2 \leq z \leq 1$$

**2.** A method of preparing a lithium-rich carbonaceous substance with the following formula:

$$LiNa_xC_yO_z \qquad (I)$$

in which x, y and z are such that

$$0.4 \leq x \leq 0.6$$
$$2.5 \leq y \leq 3.5$$
$$0.2 \leq z \leq 1$$

according to which a graphite-sodium-oxygen compound is put in contact with lithium in order to insert lithium ions therein.

**3.** A method according to claim 2, in which the insertion is carried out electrochemically in an electrolytic cell with two electrodes, one of which is made of lithium and the other of the graphite-sodium-oxygen compound, the two electrodes being immersed in an electrolyte comprising a lithium salt.

**4.** A method according to claim 3, in which the electrolyte is a mixture of ethylene carbonate and lithium perchlorate.

**5.** A method according to claim 3 or 4, in which the operation is carried out at a temperature of 20 to 90°C, by imposing a potential of 0 volts between the two electrodes or connecting the two electrodes.

**6.** A method according to any one of claims 2 to 5, in which the graphite-sodium-oxygen compound has the formula $C_{4.75 \pm 0,05}NaO0.35 \pm 0.05$.

**7.** A method according to any one of claims 2 to 5, in which the graphite-sodium-oxygen compound is prepared by putting in contact, in a sealed chamber containing no oxygen, graphite with liquid sodium containing a small quantity of oxygen, at a temperature of 460 to 480°C.

**8.** A lithium electrical accumulator comprising a negative electrode based on lithium, a positive electrode and an electrolyte which is conductive by lithium ions, in which the negative electrode comprises a lithium-rich carbonaceous substance with the formula:

$$LiNa_xC_yO_z \qquad (I)$$

in which x, y and z are such that

$0.4 \leq x \leq 0.6$
$2.5 \leq y \leq 3.5$
$0.2 \leq z \leq 1.$

**Patentansprüche**

**1.** Kohlenstoffprodukt mit hohem Lithiumgehalt, das folgender Formel entspricht:

$$LiNa_xC_yO_z \qquad (I)$$

bei der x, y und z so sind, dass

$0,4 \leq x \leq 0,6$
$2,5 \leq y \leq 3,5$
$0,2 \leq z \leq 1$

**2.** Kohlenstoffprodukt mit hohem Lithiumgehalt, das folgender Formel entspricht:

$$LiNa_xC_yO_z \qquad (I)$$

bei der x, y und z so sind, dass

$0,4 \leq x \leq 0,6$
$2,5 \leq y \leq 3,5$
$0,2 \leq z \leq 1$

bei dem man eine Graphit-Natrium-Sauerstoffverbindung mit Lithium in Kontakt bringt, um in diese Lithiumionen einzubringen bzw. einzubauen.

**3.** Verfahren nach Anspruch 2, bei dem das Einbauen auf elektrochemischem Wege erfolgt, in einer elektrolytischen Zelle mit zwei Elektroden, von denen die eine aus Lithium ist und die andere aus der Graphit-Natrium-Sauerstoffverbindung, wobei die beiden Elektroden in ein Elektrolyt getaucht sind, das ein Lithiumsalz enthält.

**4.** Verfahren nach Anspruch 3, bei dem das Eiektrolyt eine Mischung aus Ethylencarbonat und Lithiumperchlorat ist.

**5.** Verfahren nach Anspruch 3 oder 4, bei dem man mit einer Temperatur von 20 bis 90°C arbeitet, indem man zwischen den beiden Elektroden ein 0-Volt-Potential herstellt oder die beiden Elektroden verbindet.

**6.** Verfahren nach einem der Ansprüche 2 bis 5, bei dem die Graphit-Natrium-Sauerstoffverbindung der Formel $C_{4,75 \pm 0,05}NaO_{0,35 \pm 0,05}$ entspricht.

**7.** Verfahren nach einem der Ansprüche 2 bis 5, bei dem die Graphit-Natrium-Sauerstoffverbindung hergestellt wird, indem man in einem dichten Behälter, der keinen Sauerstoff enthält, bei einer Temperatur von 460 bis 480°C Graphit mit flüssigem Natrium in Kontakt bringt, das eine geringe Menge Sauerstoff enthält.

**8.** Elektrische Lithium-Sekundärbatterie mit einer negativen Elektrode auf Lithiumbasis, einer positiven Elektrode und einer durch Lithiumionen leitfähigen Elektrode, bei der die negative Elektrode ein Kohlenstoffprodukt mit hohem Lithiumgehalt umfasst, das der folgenden Formel entspricht:

$$LiNa_xC_yO_z \qquad (I)$$

bei der x, y und z so sind, dass

$0,4 \leq x \leq 0,6$
$2,5 \leq y \leq 3,5$
$0,2 \leq z \leq 1$

FIG. 1

FIG. 2

FIG. 3

FIG. 4

FIG. 5

FIG. 6

FIG. 7

FIG. 8

FIG. 9

FIG. 10